# EUROPÄISCHE PATENTSCHRIFT

(11) **EP 1 635 167 B1**
(45) Veröffentlichungstag und Bekanntmachung des Hinweises auf die Patenterteilung: **31.10.2007**
(21) Anmeldenummer: 04021958.6
(22) Anmeldetag: 10.09.2004
(51) Int. Cl.: G01N 21/94, G01N 21/55, A47L 15/00

(54) **Verfahren zur quantitativen Messung von Ablagerung auf festen Oberflächen**
Method for quantitatively measuring of deposits on solid surfaces
Procédé pour la mesure quantitative de dépôts sur des surfaces solides

(43) Veröffentlichungstag der Anmeldung: 15.03.2006
(60) Teilanmeldung: 07005331.9
(73) Patentinhaber: Cognis IP Management GmbH, 40589 Düsseldorf (DE)
(72) Erfinder: Weuthen, Manfred, Dr., 40764 Langenfeld (DE); Böhme, Corinna, Dr., 41539 Dormagen (DE); Frischemeier, Robert, 47239 Duisburg (DE)

(56) Entgegenhaltungen:
- EP-A- 0 816 832
- WO-A-00/39566
- WO-A-01/24932
- DE-A- 10 016 832
- DE-A- 10 048 081
- DE-A- 10 208 214
- DE-A- 19 961 782
- US-A1- 2002 066 873
- PATENT ABSTRACTS OF JAPAN Bd. 0130, Nr. 37 (P-819), 27. Januar 1989 (1989-01-27) & JP 63 234141 A (HITACHI PLANT ENG & CONSTR CO LTD), 29. September 1988 (1988-09-29)
- ELSNER M ET AL: "MODERNE REINIGUNGSMITTEL - ASPEKTE DER MATERIALVERTRAEGLICHKEIT UND REINIGUNGSWIRKUNG" SOFW-JOURNAL SEIFEN, OELE, FETTE, WACHSE, VERLAG FUR CHEMISCHE INDUSTRIE, H. ZIOLKOWSKY K.G. AUGSBURG, DE, Bd. 128, Nr. 3, März 2002 (2002-03), Seiten 2-7, XP001089014 ISSN: 0942-7694

## Beschreibung

Die vorliegende Erfindung betrifft ein Verfahren zur quantitativen Messung von Ablagerungen auf festen Oberflächen sowie eine für die Messung geeignete Vorrichtung.

Ein wesentlicher Parameter bei der Entwicklung Mitteln für das Geschirrspülen ist die Messung der Klarspülleistung. Dabei soll ermittelt werden, wie groß der Anteil an Ablagerungen auf den Geschirrteilen ist, nachdem diese gespült wurden. Bei den Ablagerungen handelt es sich im wesentlichen um mineralische Verbindungen, insbesondere Ca- und/oder Mg-Salze, aber auch um Tensidrückstände. Hauptsächlich führt aber Kalk zu den für den Anwender unerwünschten Ablagerungen. Um den Anteil dieser Ablagerungen zu verringern enthalten gängige Geschirrspülmittel, insbesondere solche für das automatische Geschirrspülen, in der Regel sogenannte Klarspülmittel. Marktübliche Klarspülmittel stellen üblicherweise Gemische aus schwachschäumenden nichtionischen Tensiden, typischerweise Fettalkoholpolyethylen/polypropylenglykolethern, Lösungsvermittlern (z. B. Cumolsulfonat), organischen Säuren (z. B. Zitronensäure) und Lösungsmitteln (z. B. Ethanol) dar. Die Aufgabe dieser Mittel besteht darin, die Grenzflächenspannung des Wassers so zu beeinflussen, daß es in einem möglichst dünnen, zusammenhängenden Film vom Spülgut ablaufen kann, so daß beim anschließenden Trocknungsvorgang keine Wassertropfen, Streifen oder Filme zurückbleiben. Unterschieden wird zwischen zwei Arten von Ablagerungen. Zum einen wird das sogenannte "Spotting" untersucht, welches durch abtrocknende Wassertropfen entsteht, zum anderen bewertet man das "Filming", das sind Schichten, die durch das Abtrocknen dünner Wasserfilme entstehen. Zur Bewertung werden derzeit Probanden eingesetzt, die visuell bei gereinigten Objekten, z.B. Teller, Gläser, Messer etc. die Parameter "Spotting" und "Filming" bewerten. Dieses Verfahren ist zum einen sehr zeitaufwendig und, da nur vergleichende Bewertungen möglich sind, ist ein Bezug zu anderen Messreihen nicht gegeben.

Aus dem Stand der Technik sind verschiedene Verfahren zur Messung von Ablagerungen/Verschmutzungen auf Oberflächen bekannt. Die DE 100 16 832 A1 offenbart ein Verfahren zur quantitativen Messung von Ablagerungen auf festen Oberflächen, wobei die Oberfläche mit sichtbarem Licht aus einer Lichtquelle bestrahlt wird, und das vom Prüfling reflektierte oder gestreute Licht von einer Kamera aufgefangen wird. Das so erhaltene Licht wird später Computer stützt ausgewertet. Die JP 63234141 A1 beschreibt ein Verfahren zur Messung von Ablagerungen auf festen Oberflächen eines scheibenförmigen Prüflings. Dazu wird sichtbares Licht aus einer Lichtquelle auf den Prüfling geleitet und das reflektierte Licht von einer Kamera aufgefangen und das gewonnene Bild ausgewertet. Das Verfahren sieht vor, dass der Prüfling vor der Messung mit Wasserdampf behandelt wird, um die Ablagerungen besser sichtbar zu machen. Aus der DE 199 61 782 A1 ist ein Verfahren zur Messung von Anschmutzungen auf Geschirrteilen in Geschirrspülmaschinen bekannt, bei dem innerhalb des Geschirrspülers das zu reinigende Gut mit Licht bestrahl und die Intensitätsänderung während des Spülganges durch einen Empfänger gemessen und Computer gestützt ausgewertet werden. Die DE 100 48 081 A1 beschreibt ein Verfahren zur Erkennung der Spülgutbeladung in einer Geschirrspülmaschine. Dazu wird ein Bild des Spülgutes vor und nach dem Spülgang Computer gestützt vergleichen und daraus der Spülerfolg abgeleitet. Die DE 100 208 214 A1 beschreibt eine Vorrichtung zur Überprüfung der Belagbildung in Wasserfürenden Geräten. Hierbei wird Licht auf die zu messende Oberfläche geleitet und der Intensitätsverlust anschließend ausgewertet um daraus auf den Grad Ablagerungen Rückschlüsse ziehen zu können. Die US 2002/0066873 A1 schließlich beschreibt ein Verfahren zur Messung von Rückständen auf Oberflächen, vorzugsweise in Waschmaschinen. Hierzu wird Licht auf die zu untersuchende Oberfläche geleitet und aus der Abnahme der Intensität können dann Rückschlüsse auf den Grad der Verschmutzung gezogen werden. Die WO 00/39566 A1 beschreibt ein optisches Verfahren zur Messung der Menge von Staub oder Verschmutzung auf eine Oberfläche. Hierzu wird Licht aus punktförmigen Lichtquellen auf die Oberfläche geleitet und das reflektierte Licht ausgewertet. Sofern Schmutz in Form von Mikrotröpfchen auf der Oberfläche vorhanden ist, führt dies zu einem Linseneffekt, der die Lichtintensität in Ahängigkeit von der Belegung der Oberfläche mit Staub oder Verschmutzungen verändert. Die WO 01/24932 A1 beschreibt eine Vorrichtung zur Qualitätskontrolle von auf einem Substrat aufgebrachten Mikrotröpfchen. Hierzu wird Licht auf die Mikrotröpfchen geleitet, wobei durch den Linseneffekt die Intensität des reflektierten Lichts verändert wird. Diese Intensitätsänderung wird gemessen und ausgewertet.

Es besteht daher ein Bedürfnis, derartige Messung möglichst automatisiert und insbesondere anhand objektiver Parameter durchführen zu können.

Es wurde gefunden, dass durch eine optisches Verfahren, dass die Reflektion bzw. Streuung von Licht auf den Oberflächen von gereinigten Flächen misst die oben bezeichnete Aufgabe gelöst werden kann.

Gegenstand der vorliegenden Anmeldung ist in einer ersten Ausführungsform ein Verfahren zur quantitativen Messung von Spotting-Ablagerungen, bestehend aus mineralischen Verbindungen oder um Tensidrückstände, auf festen, glatten Oberflächen wobei die Oberfläche zur Messung als planer Prüfling ausgebildet ist, vorzugsweise in Form einer rechteckigen oder runden Platte, und solche Materialien für den Prüflin^{g} ausgewählt sind, deren Reflektionsvermögen mindestens 0.5 beträgt, und der Prüfling mit sichtbarem Licht aus einer flächigen Lichtquelle bestrahlt wird, wobei die flächige Lichtquelle in einem Winkel von 2 bis 20 °, bezogen auf das Lot über der Oberfläche des Prüflings angeordnet ist und ebenfalls oberhalb der zu messenden Oberfläche eine Kamera zum Auffangen des reflektierten Lichts angebracht ist, wobei der Winkel der Kamera den gleichen Winkel zum Lot aufweist wie die flächige Lichtquelle, aber mit anderem Vorzeichen und das von der Kamera gewonnene Bild computergestützt ausgewertet wird. wobei das reflektierte Licht digitalisiert wird und auf einen Personalcomputer übertragen wird und das digitalisierte Bild dort von einer Software ausgewertet wird, wobei durch die digitale Bildanalyse die Verteilung der Spottingbereiche ermittelt wird wobei die digitale Bildverarbeitun nach deutlichen Kanten der Spottin^{g}flächen sucht, und anhand dieser Kanten die ein^{g}e-schlossenen Flächen berechnet und anschließend in Größenklassen sortiert und eine prozentuale Spotting-Belastung berechnet.

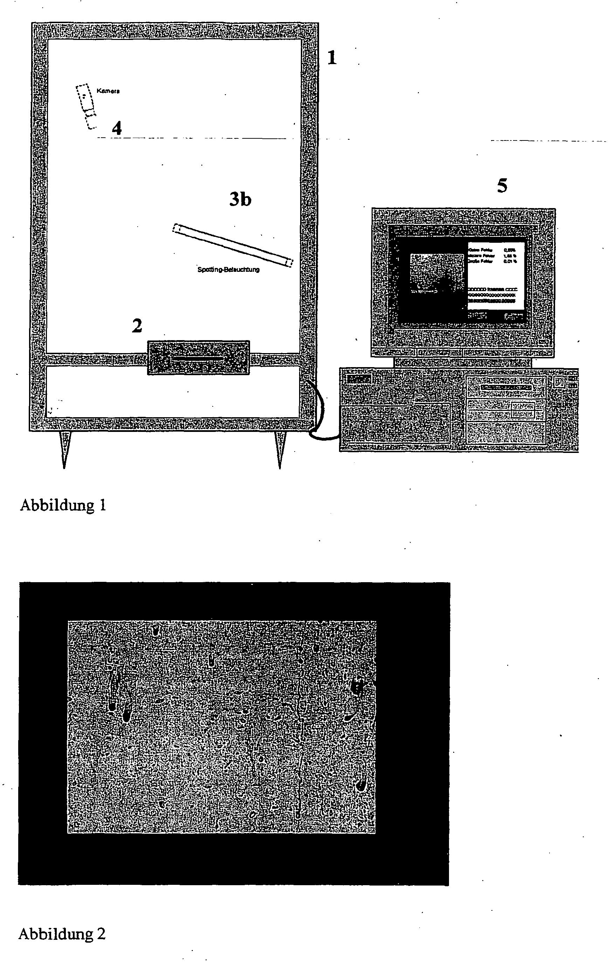

In der Abbildung 1 sind die Elemente einer Vorrichtung zur Durchführung des Verfahrens dargestellt. Eine solche Vorrichtung, nach Anspruch 2, ist ebenfalls Gegenstand der vorliegenden Erfindung. Das Verfahren wird in einer lichtdichten Messbox (1) durchgeführt, in der mittig ein Prüfling (2) angebracht ist, und oberhalb des Prüflings aber innerhalb der Messbox eine Kamera (4) installiert ist, deren Objektiv auf den Prüfling gerichtet ist und das Objektiv der Kamera auf den Prüfling gerichtet ist und eine flächige lichtquelle in einem Winkel von 2 ° bis 20 °, bezogen auf das Lot, oberhalb des Prüflings vorhanden ist, und der Winkel der Kamera den gleichen Winkel zum Lot aufweist wie die Flächige Lichtquelle, aber mit anderem Vorzeichen,. Ober des Prüflings befindet sich die flächige Lichtquelle (3b), deren Licht auf den Prüfling gerichtet ist. Das von der Kamera (4) aufgenommene Bild wird digitalisiert und auf einen üblichen Computer (5), vorzugsweise einem handelsüblicher Personalcomputer übertragen, wo es von einer handelsüblichen Software für die Bildauswertung weiterverarbeitet wird. Der Computer befindet sich dabei vorzugsweise außerhalb der Messbox (1) und ist beispielsweise über ein Datenkabel mit der Kamera (4) innerhalb der Messbox (1) verbunden. Als Kamera eignen sich insbesondere so genannte CCD-Kameras, die direkt ein digitales Bild erzeugen. Die Messbox (1) ist zur Vermeidung von Streulicht vorzugsweise mit einem schwarzen, lichtschluckenden Anstrich versehen.

Wesentlicher Aspekt bei dem vorliegenden erfindungsgemäßen Verfahren ist der Umstand, dass kein Spülgut wie Tassen, Besteck etc., eingesetzt wird, welches über eine unregelmäßige Form verfügt, sondern das nur ein plan ausgebildeter Prüfling eingesetzt wird, der aus dem zu untersuchenden Material besteht, oder dessen Oberfläche das zu untersuchende Material enthält. Der Prüfling wird vorzugsweise in eine Halterung eingesetzt. Diese kann beispielsweise aus Metall oder Kunststoff hergestellt werden. Die Halterung ist mit der Messbox verbunden, wobei die Halterung so ausgebildet werden kann, das der Prüfling leicht zugänglich ist und ebenso gewechselt werden kann. Vorzugsweise wird eine Halterung in Form einer Schublade ausgebildete, um ein einfaches Bedienen zu ermöglichen.

Das zu prüfenden Material wird vorzugsweise reversibel (z.B. durch eine Schraub- oder Schnappverbindung) in die Halterung eingesetzt. Dabei ist die Halterung so gestaltet, dass das Licht der Lichtquellen ungehindert sowohl von untern als auch von oben auf das in der Halterung der Prüflings befindliche Material gelangen kann. Bevorzugt sind daher solche Halterungen, die einen Rahmen bilden, wobei das zu prüfenden Material in die Aussparung der Halterung eingelegt und in geeigneter Form fixiert wird. Die Halterung ist vorzugsweise aus Metall oder einer Legierung hergestellt.

Der Prüfling hat vorzugsweise eine Fläche von 20 cm² bis zu 250 cm². Dabei kann der Prüfling rechteckig, quadratisch, rund oder elliptisch ausgebildet sein. Vorzugsweise ist der Prüfling aber rechteckig ausgebildet. Der Prüfling ist plan ausgebildet, d.h. er bildet eine ebene Fläche. Der Prüfling selber besteht aus einer glatten Oberfläche, wie sie typischerweise auch beim Geschirrspülen vorkommt, also Keramik, Porzellan, Glas, Kunststoffe oder Metalle. Es können aber auch andere plane Oberflächen, z.B. aus Beton oder Gesteinsoberflächen gemessen werden. Das Material des Prüflings muss dabei so fest sein, dass es sich während der Messung nicht verbiegt. Ausgenommen sind also insbesondere Flüssigkeiten oder Gele und solche Feststoffe die keine glatten Oberflächenausbilden, also beispielsweise Pulver, Stäube oder Granulate. Die im erfindungsgemäßen Verfahren verwendeten Oberflächen müssen über ein ausreichendes Reflektionsvermögen verfügen. Eine ideal reflektierende Oberfläche, bei der das gesamte einfallende Licht reflektiert wird, weißt ein Reflexionsvermögen von 1 auf. Reale Materialien haben Reflexionswerte von kleiner 1. Um im erfindungsgemäßen Verfahren eingesetzt zu werden ist es notwendig solche Materialien für den Prüfling auszuwählen, deren Reflexionsvermögen mindestens 0,5, vorzugsweise mindestens 0,6 beträgt. Ein bevorzugter Bereich liegt bei 0,6 bis 0,95.

Die Lichtquelle wird ober halb des Prüflings vorzugsweise innerhalb der Messbox, angebracht. Dabei kann die Lichtquelle fest oder beweglich (schwenkbar) angeordnet sein, um sie justieren zu können. Für die eigentliche Messung muss die Lichtquelle aber fest montiert sein. Für das erfindungsgemäße Verfahren wird vorzugsweise sichtbares Licht im Wellenlängenbereich von 380 bis 800 nm eingesetzt. Das Licht muss nicht monochromatisch vorliegen. Es kann also auch schmal- oder breitbandiges Licht unterschiedlicher Wellenlänge eingesetzt werden. Es ist aber prinzipiell auch möglich, das erfindungsgemäße Verfahren bei anderen Wellenlängen (z.B. IR oder UV-Licht) durchzuführen. Im Sinne der vorliegenden Erfindung ist aber das sichtbare Licht bevorzugt, da man einen Eindruck von der visuellen Empfindung erhalten möchte, die ein Mensch beim Anblick solcher Oberflächen hat. Lampen, die im erfindungsgemäßen Verfahren eingesetzt werden können, weisen vorzugsweise eine Helligkeit von 1000 cd/m² auf, wobei Lampen mit höherer Helligkeit, z.B. 1200 bis 1600 cd/m² bevorzugt sind. Die Art und Weise in der das Licht erzeugt wird, ist im Rahmen der vorliegenden technischen Lehre nicht kritisch. Im Verfahren ist die Kamera vorzugsweise so auszurichten, dass sie direkt die von der Oberfläche des Prüflings gestreute bzw. reflektierten Lichtstrahlen auffangen kann.

Beim erfindungsgemäßen Verfahren handelt es sich um die Messung zur Ermittlung des sogenannten Spottings. Spotting entsteht durch abtrocknende, einzelne Wassertropfen. Die in den Wassertropfen enthaltenen Mineralien lagern sich nach dem Trocknen auf dem Spülgut ab und hinterlassen matte Flächen mit klarer Umgrenzung. Die vorliegende technische Lehre geht nun von der Erkenntnis aus, dass an den Ablagerungen das Licht einer Flächenbeleuchtung diffus gestreut wird, d. h. das nur noch ein Bruchteil des Lichtes auf einer Spotting-freien Fläche reflektiert wird und in das Objektiv der Kamera gelangt. Es entsteht dann das Bild eines hellen Objekts mit dunklen Flecken (vgl. dazu Abbildung 2).

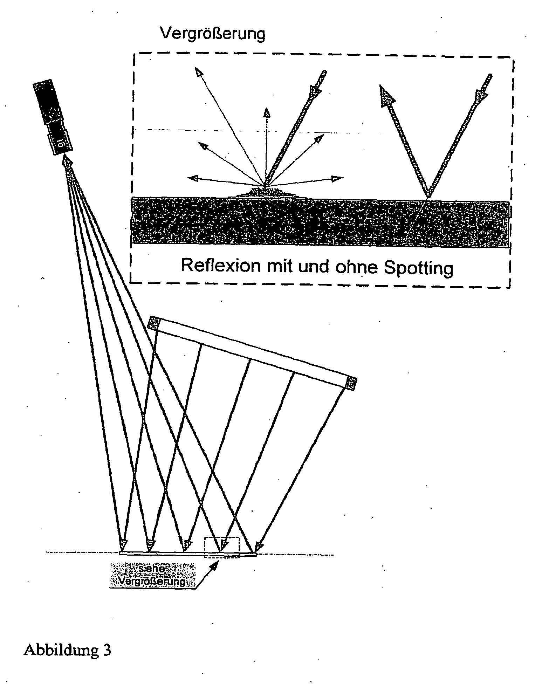

Durch eine digitale Bildanalyse kann die Intensität und ggf. Verteilung der Spotting-Bereiche gemessen und analysiert werden und dient so als Basis für die Beurteilung unterschiedlicher Klarspülmittel. Dabei geht das Verfahren zur Messung des Spottings im wesentlichen davon aus, dass in einer Messeinrichtung gemäß Abbildung 1 eine Flächenbeleuchtung oberhalb des Messprüflings angebracht ist, wobei der Winkel zwischen dem Lot und den einfallenden Lichtstrahlen im Bereich von 2 bis 20° und insbesondere im Bereich von 10 bis 20 ° liegen sollte. Das von der Oberfläche des Prüflings reflektierte Licht wird von einer Kamera als Bild aufgefangen und einem Computer zu einer digitalen Bildanalyse zugeführt. Die Kamera ist dabei direkt auf das von der Oberfläche reflektierte Licht gerichtet, wobei die Kamera vorzugsweise den gleichen Winkel zum Lot aufweist, wie die Lampe, aber mit anderem Vorzeichen. Dies wird in der Abbildung 3 deutlich.

Die Oberfläche des Prüflings wird im spotting-losen Zustand vollständig von dem Objektiv der Kamera aufgenommen. Sofern auf der Oberfläche des Prüfling Spotting-Bereiche vorliegen, wird an diesen Ablagerungen das Bild der Flächenbeleuchtung diffus gestreut, d.h., dass nur noch ein Bruchteil des im spotting-losen Fall reflektierten Lichts in das Objektiv der Kamera gelangt (siehe Abbildung 3). Die digitale Bildverarbeitung sucht nun nach deutlichen Kanten der Spotting-Flächen (mittels der Funktionen Sobel-Filter, Kanten füllen, danach wird ein Binärbild generiert) und berechnet so anhand der gefundenen Kanten die eingeschlossenen Flächen. Anschließend werden diese Flächen in drei Größenklassen einsortiert. Als Messergebnis erhält man die prozentuale Spotting-Belastung in Bezug auf die Messfläche, unterteilt in mehrere Größenklassen.

Um den gesamten Prüfling abbilden zu können ist eine bevorzugt eine Flächenbeleuchtung einzusetzen. Diese kann vorzugsweise eine Fläche von 40000 bis 100000 mm² aufweisen. Eine Leuchte dieses Typs (Phlox® Backlight) hat beispielweise eine leuchtende Fläche von 300 x 220 mm². Die erfindungsgemäß vorzugsweise verwendeten Flächenleuchten sollten vorzugsweise das Licht gleichmäßig über die ganze Fläche abstrahlen. Es kann vorteilhaft sein, die Helligkeit der Lampe stufenlos zu regulieren. Auch hier gilt, dass die Helligkeit der Lampe vorzugsweise 1000 cd/m² oder größer beträgt. Besonders bevorzugt sind flächige Lampen mit Helligkeiten von 1200 bis 1600 cd/m². Es kann vorteilhaft sein solche Lampen einzusetzen, deren Helligkeit frei einstellbar ist.

Das erfindungsgemäße Verfahren kann verwendet werden, um die Spotting-Eigenschaften von Reinigungsmitteln (oder anderen Tensid-haltigen wässerigen Mitteln) zu testen bzw. zu bewerten. Dazu werden die Prüflinge einer Reinigung unterworfen, wobei z.B. verschiedene Reinigungsmittel und/oder Dosierungen derselben benutzt werden. Dazu werden die Prüflinge mit wässerigen Lösungen geeigneter Reinigungsmittel in Kontakt gebracht. bevorzugt ist es, Prüflinge in einer Geschirrspülmaschine zu reinigen. Anschließend werden die Prüflingen hintereinander durch das erfindungsgemäße Verfahren gemessen. Die vorliegende technische Lehre schließt es auch ein, die Messung durch geeignete Vorrichtungen weitgehend zu automatisieren, indem beispielsweise mehre Prüflinge hintereinander gemessen werden.

### Beispiele

### Spotting-Messung

Eine gespülte Glasplatte (Prüfling) mit den Abmessungen von 15*20 cm wird durch eine homogene flächige Lichtquelle (hier eine Phlox® Backlight) mit den Abmessungen von 22*30 cm beleuchtet. Die Lichtquelle befindet sich im Abstand von 33 cm und im Winkel von 18° aus der Senkrechten zur Glasplatte. Im Winkel von -18° (Einfallswinkel=Ausfallswinkel) befindet sich im Abstand von 66 cm eine CCD-Kamera mit 1/3" CCD und einem 16 mm Objektiv. Das Licht der flächigen Lichtquelle wird an der Oberfläche der Glasplatte reflektiert und trifft auf das 16mm Objektiv der CCD-Kamera. Spotting auf der Glasoberfläche verursachen eine diffuse Lichtstreuung und bewirken in der Abbildung auf dem CCD-Chip der Kamera eine Kontraständerung und sind damit sichtbar. Mit einer beliebigen digitalen Bildauswertung wird nun unter Verwendung der Standardfilter zur Grauwertkantenfindung (Sobelfilter) und Schwellwert ein Binärbild erstellt. Die einzelnen Objekte im Binärbild werden in verschiedene Größenklassen sortiert und als Spottingmessgröße ausgegeben.

**Tabelle 1**

| | Spotting,kleine Fehler[%] | Spotting,mittlere Fehler[%] | Spotting, grosse Fehler[%] | SpottingSumme [%] |
|---|---|---|---|---|
| Produkt A | 0,64 | 1,12 | 1,80 | 3,56 |
| Produkt B | 2,19 | 3,36 | 3,38 | 8,93 |

## Patentansprüche

1. Verfahren zur quantitativen Messung von Spotting-Ablagerungen, bestehend aus mineralischen Verbindungen oder um Tensidrückstände, auf festen, glatten Oberflächen
wobei die Oberfläche zur Messung als planer Prüfling (2) ausgebildet ist, vorzugsweise in Form einer rechteckigen oder runden Platte.
und solche Materialien für den Prüfling (2) ausgewählt sind, deren Reflektionsvermögen mindestens 0,5 beträgt,
und der Prüfling (2) mit sichtbarem Licht aus einer flächigen Lichtquelle (3b) bestrahlt wird,
wobei die flächige Lichtquelle (3b) in einem Winkel von 2° bis 20°, bezogen auf das Lot über der Oberfläche des Prüflings (2) angeordnet ist
und ebenfalls oberhalb der zu messenden Oberfläche eine Kamera (4) zum Auffangen des reflektierten Lichts angebracht ist
wobei der Winkel der Kamera (4) den gleichen Winkel zum Lot aufweist wie die flächige Lichtquelle (3b), aber mit anderem Vorzeichen und
das von der Kamera (4) gewonnene Bild computergestützt ausgewertet wird,
wobei das reflektierte Licht digitalisiert wird und auf einen Personalcomputer (5) übertragen wird
und das digitalisierte Bild dort von einer Software ausgewertet wird,
wobei durch die digitale Bildanalyse die Verteilung der Spottingbereiche ermittelt wird, wobei die digitale Bildverarbeitung nach deutlichen Kanten der Spottingflächen sucht, und anhand dieser Kanten die eingeschlossenen Flächen berechnet und anschließend in Größenklassen sortiert und eine prozentuale Spotting-Belastung berechnet.

2. Vorrichtung zur Durchführung eines Verfahrens nach dem Anspruch 1
mit einer lichtdichten Messbox (1),
mit einem flächigen Prüfting (2),
einer flächigen Lichtquelle (3b),
einer Kamera (4)und
einem Computer (5),
**dadurch gekennzeichnet, dass**,
der flächige Prüfling (2) mittig in der Messbox (1) vorgesehen ist,
und die Kamera (4) oberhalb des Prüflings (2) aber innerhalb der Messbox (1) angebracht ist,
und das Objektiv der Kamera (4) auf den Prüfling (2) gerichtet ist und die flächige Lichtquelle (3b) in einem Winkel von 2° bis 20°, bezogen auf das Lot, oberhalb des Prüflings (2) vorhanden ist, und der Winkel der Kamera (4) den gleichen Winkel zum Lot aufweist wie die flächige Lichtquelle (3b), aber mit anderem Vorzeichen,
und ihr Licht auf den Prüfling (2) gerichtet ist,
und das in der Kamera (4) aufgenommene Bild in digitaler Form an den Computer (5) weitergeleitet und dort ausgewertet wird.

## Claims

1. Method for quantitatively measuring spotting deposits consisting of mineral compounds or surfactant residues on hard, smooth surfaces, the surface to be measured being in the form of a flat test specimen (2), preferably in the form of a rectangular or round plate, and materials having a reflectivity of at least 0.5 being selected for the test specimen (2) and the test specimen (2) being exposed to visible light from a flat light source (3b), the flat light source (3b) being arranged at an angle of 2° to 20° relative to the perpendicular over the surface of the test specimen (2) and a camera (4) also being arranged above the surface to be measured to pick up the reflected light, the camera (4) being arranged at the same angle relative to the perpendicular as the flat light source (3b), but with a different sign, and the image obtained by the camera (4) being evaluated with computer assistance, the reflected light being digitalized and transferred to a personal computer (5) and the digitalized image being evaluated therein by software, the distribution of the spotting zones being determined by the digital image analysis, the digital image processing searching for distinct edges of the spotting zones and calculating the enclosed areas on the basis of those edges and then sorting them into size classes and calculating a percentage spotting load.

2. Apparatus for carrying out the method claimed in claim 1 comprising a lightproof measuring box (1), a flat test specimen (2), a flat light source (3b), a camera (4) and a computer (5), **characterized in that** the flat test specimen (2) is disposed centrally in the measuring box (1) and the camera (4) is arranged above the test specimen (2), but inside the measuring box (1), and the lens of the camera (4) is directed onto the test specimen (2) and the flat light source (3b) is present at an angle of 2° to 20° relative to the perpendicular above the test specimen (2) and the camera (4) is arranged at the same angle relative to the perpendicular as the flat light source (3b), but with a different sign, and its light is directed onto the test specimen (2) and the image recorded in the camera (4) is transferred in digital form to the computer (5) and evaluated therein.

## Revendications

1. Procédé pour la mesure quantitative de dépôts ponctuels, constitués de composés minéraux ou de résidus tensio-actifs, sur des surfaces solides lisses,
selon lequel
on réalise la surface pour la mesure sous la forme d'une éprouvette plane (2), de préférence d'une plaque rectangulaire ou circulaire,
on choisit pour l'éprouvette (2) des matériaux dont le pouvoir réfléchissant est au minimum de 0,5,
on expose l'éprouvette (2) à de la lumière visible provenant d'une source lumineuse plane (3b), la source lumineuse plane (3b) étant orientée d'un angle de 2° à 20° par rapport à la verticale au-dessus de la surface de l'éprouvette (2),
on dispose également une caméra (4) au-dessus de la surface à mesurer pour capter la lumière réfléchie, l'angle de la caméra (4) étant le même que celui de la source lumineuse plane (3b) par rapport à la verticale, mais avec un signe inversé, et
on exploite l'image obtenue par la caméra (4) avec assistance d'un ordinateur, la lumière réfléchie étant numérisée et transmise à un ordinateur personnel (5), dans lequel l'image numérisée est exploitée par un logiciel,
la répartition des zones de dépôts ponctuels étant déterminée par analyse numérique de l'image, le traitement numérique de l'image recherchant des bords nets des surfaces de dépôts ponctuels et, au moyen de ces bords, les surfaces incluses étant calculées puis triées en classes de grandeur et un pourcentage de charge en dépôts ponctuels étant calculé.

2. Dispositif pour la mise en oeuvre d'un procédé selon la revendication 1,
comprenant :
une boîte de mesure étanche à la lumière (1),
une éprouvette plane (2),
une source lumineuse plane (3b),
une caméra (4) et
un ordinateur (5),
**caractérisé en ce que**
l'éprouvette plane (2) est prévue au centre de la boîte de mesure (1),
la caméra (4) est disposée au-dessus de l'éprouvette (2), mais à l'intérieur de la boîte de mesure (1),
l'objectif de la caméra (4) est dirigé sur l'éprouvette (2), la source lumineuse plane (3b) est orientée d'un angle de 2° à 20° par rapport à la verticale au-dessus de l'éprouvette (2), l'angle de la caméra (4) est le même que celui de la source lumineuse plane (3b) par rapport à la verticale, mais avec un signe inversé, et sa lumière est dirigée sur l'éprouvette (2),
et l'image enregistrée dans la caméra (4) est transmise sous forme numérique à l'ordinateur (5) et exploitée dans celui-ci.
